# FASCICULE DE BREVET EUROPEEN

(11) **EP 2 758 699 B1**
(45) Date de publication et mention de la délivrance du brevet: **08.12.2021**
(21) Numéro de dépôt: 12773068.7
(22) Date de dépôt: 20.09.2012
(51) Int. Cl.: F16L 3/123, F16L 3/233

(54) **COLLIER D'ATTACHE POUR DES ELEMENTS ALLONGES**
ZUGKRAGEN FÜR LÄNGLICHE ELEMENTE
TIE COLLAR FOR ELONGATE ELEMENTS

(30) Priorité: 22.09.2011 FR 1158447
(43) Date de publication de la demande: 30.07.2014
(73) Titulaire: Aplix, 44850 Le Cellier (FR)
(72) Inventeur: BILLARANT, Fabrice, F-44000 Reze (FR); CHEVALIER, Aurélie, F-49270 Champtoceaux (FR)
(74) Mandataire: Cabinet Beau de Loménie
(86) Numéro de dépôt international: PCT/FR2012/052099
(87) Numéro de publication internationale: WO 2013/041809

(56) Documents cités:
- EP-A1- 2 437 365
- US-A- 3 429 985

## Description

La présente invention concerne un collier d'attache pour des éléments allongés du type comprenant une partie de ceinture apte à être fixée sur un support, cette partie de ceinture étant ouverte et définissant un espace intérieur apte à recevoir les éléments allongés, et comprenant en outre des moyens pour fermer la partie de ceinture de manière à retenir les éléments allongés dans l'espace intérieur.

Le collier selon la présente invention est particulièrement adapté pour attacher des câbles ou des tuyaux. Il peut être utilisé dans tous les secteurs industriels, notamment dans l'aéronautique pour guider le cheminement des câbles le long des parois de l'habitacle.

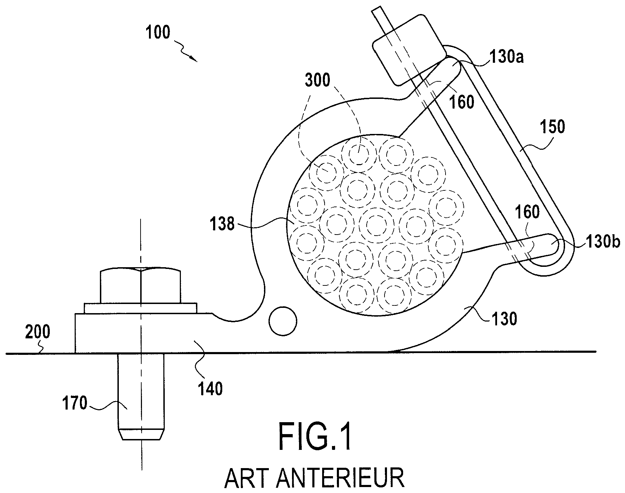

On connaît déjà un collier d'attache 100 tel qu'illustré sur la figure 1, destiné à attacher un faisceau de câbles 300 à un support 200. Ce collier 100 comprend une partie de ceinture 130, réalisée en matériau thermoplastique, formant un espace intérieur ouvert 138 pour recevoir les câbles 300. Pour empêcher les câbles 300 de sortir de l'espace intérieur 138, un attache-câble 150 est introduit dans des fentes 160 formées à chaque extrémité libre 130a, 130b de la partie de ceinture 130. Une patte de fixation 140, solidaire de la partie de ceinture 130, est adaptée à coopérer avec une vis 170 pour la fixation du collier d'attache 100 au support 200.

Ce genre de collier présente de nombreux inconvénients. Leur mise en œuvre est malaisée du fait que l'operateur doit introduire l'attache-câble 150 dans les fentes 160 de dimensions restreintes, formées aux extrémités libres 130a, 130b de la partie de ceinture 130. Par la suite, notamment lors des opérations de maintenance, l'opérateur doit généralement se munir d'une pince et manipuler avec minutie la zone de fermeture de l'attache-câble pour rouvrir la partie de ceinture 130 et en sortir les câbles 300. Le risque est important qu'à cette occasion au moins un câble soit endommagé ou sectionné.

Un autre exemple de collier d'attache du type précité est connu du document US 3,429,985. Ce collier a pour inconvénient que les éléments n'y sont pas retenus de manière fiable, et que, d'autre part, sa fermeture est conditionnée par la présence d'éléments dans l'espace intérieur de la partie de ceinture et par le diamètre de tels éléments.

L'un des objectifs de la présente invention est de fournir un collier d'attache pour des éléments allongés, permettant de remédier aux inconvénients de l'art antérieur énoncés ci-dessus.

En particulier, la présente invention a pour objet un collier d'attache dont la fermeture et la réouverture sont facilitées et sécurisées de telle manière que les éléments allongés retenus par le collier ne risquent pas d'être abîmés, notamment lors d'opérations de maintenance.

Cet objectif est atteint grâce à un collier d'attache du type précité tel que défini dans la revendication 1, dans lequel les moyens pour fermer la partie de ceinture comprennent d'une part un champ d'éléments agrippants formés en plastique injecté, d'une seule pièce avec la partie de ceinture et situés sur la face externe de cette dernière et, d'autre part, un ruban solidarisé à la partie de ceinture par l'une de ses extrémités, sa face interne présentant des moyens de retenue aptes à coopérer avec les éléments agrippants de la partie de ceinture pour solidariser le ruban et la partie de ceinture, la partie de ceinture et le ruban étant réalisés en matériau thermoplastique, la partie de ceinture présentant une rigidité supérieure à celle du ruban.

Le collier d'attache selon l'invention est fermé par un système auto-agrippant qui permet une ouverture et une fermeture aisées et répétées du collier, par simple rabattement du ruban sur la partie de ceinture.

L'ouverture du collier, qui se fait manuellement sans nécessité d'utiliser des outils coupants, ne risque pas d'endommager les éléments allongés reçus dans l'espace intérieur de la partie de ceinture.

D'autre part, la fermeture obtenue est très fiable. Pour libérer les éléments disposés dans l'espace intérieur de la partie de ceinture, il est nécessaire de véritablement peler le ruban, de sorte que les ouvertures intempestives sont empêchées.

Enfin, le ruban et la partie de ceinture sont fixés entre eux par la coopération des éléments agrippants et des moyens de retenue, indépendamment de la présence ou non d'éléments dans l'espace intérieur de la partie de ceinture et du diamètre de tels éléments.

Les éléments agrippants peuvent présenter une forme de crochets, de champignons, de harpons ou toute autre forme adaptée à coopérer avec la contrepartie formée sur le ruban par les moyens de retenue, cette contrepartie pouvant elle-même comprendre des éléments de retenue tels que des boucles, des crochets ou autre.

Les éléments agrippants issus de la partie de ceinture et la contrepartie formée par les éléments de retenue peuvent indifféremment constituer une fermeture mâle-mâle ou mâle-femelle.

Selon l'invention, les éléments agrippants sont moulés par injection en même temps que la partie de ceinture. Ils sont ainsi d'une seule pièce avec la partie de ceinture. Dans la présente demande, « d'une seule pièce » doit être entendu comme signifiant d'un seul tenant, c'est-à-dire sans interface ni discontinuité, notamment au niveau microscopique.

En outre, selon l'invention, la partie de ceinture est une pièce rigide. En particulier, elle a la capacité de conserver, en l'absence de tout moyen de support ou de maintien extérieur, sa forme définissant un espace intérieur ouvert..

Selon un exemple préféré de l'invention, la partie de ceinture est surmoulée sur le ruban. En d'autres termes, l'injection de la partie de ceinture et la liaison avec le ruban sont réalisées en une seule et même étape. Lors de l'injection, des points d'ancrage maintiennent généralement le ruban de façon à ce qu'il ne soit pas déplacé et que son emprisonnement au sein de l'épaisseur de matière plastique soit assuré.

Selon un exemple de réalisation, le ruban est solidarisé à une extrémité libre de la partie de ceinture et le champ d'éléments agrippants recouvre une partie de la face externe de la partie de ceinture située du côté de son autre extrémité libre.

Selon un exemple de réalisation, le ruban est formé à partir de fibres.

Le ruban peut par exemple être réalisé en tissu et peut comprendre un champ de boucles formant moyens de retenue.

Le ruban peut aussi être un non-tissé.

Le ruban est réalisé dans une matière thermoplastique. Il peut ainsi être constitué d'une fine bande en matière thermoplastique comprenant des crochets, des champignons ou des harpons ou d'autres éléments agrippants complémentaires de ceux de la partie de ceinture.

Le ruban peut notamment être réalisé dans le même matériau que la partie de ceinture. Il peut par exemple être réalisé en plastique injecté, d'une seule pièce avec la partie de ceinture.

Selon un exemple de réalisation, les éléments agrippants sont des crochets.

Selon un exemple de réalisation, la partie de ceinture présente une section généralement courbe.

Selon un exemple de réalisation, la partie de ceinture présente un profil intérieur en arc de cercle comportant un axe.

Selon un exemple de réalisation, le champ d'éléments agrippants s'étend sur un secteur angulaire au moins égal à 45°.

Selon un exemple de réalisation, une barrette de sécurité s'étend depuis un premier bord de la partie de ceinture, et ladite barrette est configurée de sorte que son extrémité libre est apte à être rabattue en direction du bord opposé de la partie de ceinture. En position rabattue, la barrette de sécurité recouvre la partie de ceinture, de préférence sur toute sa largeur. Pour assurer son maintien en position, l'extrémité libre de la barrette de sécurité peut être fixée, et notamment clipsée, sur le bord opposé de la partie de ceinture.

Selon un exemple, en position rabattue, la barrette de sécurité serre le ruban contre la partie de ceinture. Dans ce cas, la barrette de sécurité peut comporter, sur sa face dirigée vers la partie de ceinture, une pluralité de reliefs en saillie. Ces reliefs en saillie constituent des appuis locaux sur la partie de ceinture pour favoriser le maintien du ruban contre la partie de ceinture.

Selon un autre exemple, un jeu est conservé entre le ruban et la barrette de sécurité en position rabattue. Dans ce cas, la barrette de sécurité empêche que l'extrémité libre du ruban soit éloignée radialement de la partie de ceinture, et que le collier d'attache soit ainsi ouvert par inadvertance.

Selon un exemple de réalisation, une patte de fixation, apte à coopérer avec un élément de fixation, notamment une vis, s'étend depuis la partie de ceinture, sensiblement tangentiellement à cette dernière.

Plusieurs exemples de réalisation sont décrits dans le présent exposé. Toutefois, sauf précision contraire, les caractéristiques décrites en liaison avec un exemple de réalisation quelconque peuvent être appliquées à un autre exemple de réalisation.

L'invention sera bien comprise et ses avantages apparaîtront mieux, à la lecture de la description détaillée qui suit, de plusieurs modes de réalisation représentés à titre d'exemples non limitatifs. La description se réfère aux dessins annexés sur lesquels :
- La figure 1 illustre un collier d'attache connu de l'art antérieur ;
- La figure 2 est une vue en perspective d'un collier d'attache selon un exemple de réalisation de la présente invention, avant montage ;
- La figure 3 est une vue en perspective du collier d'attache de la figure 2, une fois les câbles introduits dans l'espace intérieur de la partie de ceinture, et le ruban rabattu sur la face externe de la partie de ceinture ;
- La figure 4 montre le collier de la figure 2, dans lequel le ruban est serré par la barrette de sécurité contre la face externe de la partie de ceinture ;
- La figure 5 est une vue en coupe selon V-V de la figure 4, montrant plus en détail la barrette de sécurité ;
- La figure 6 est une vue en coupe radiale du collier illustré sur la figure 4, selon VI-VI de la figure 5 ;
- Les figures 7 à 9 illustrent d'autres moyens pour fixer le collier d'attache selon l'invention à un support.

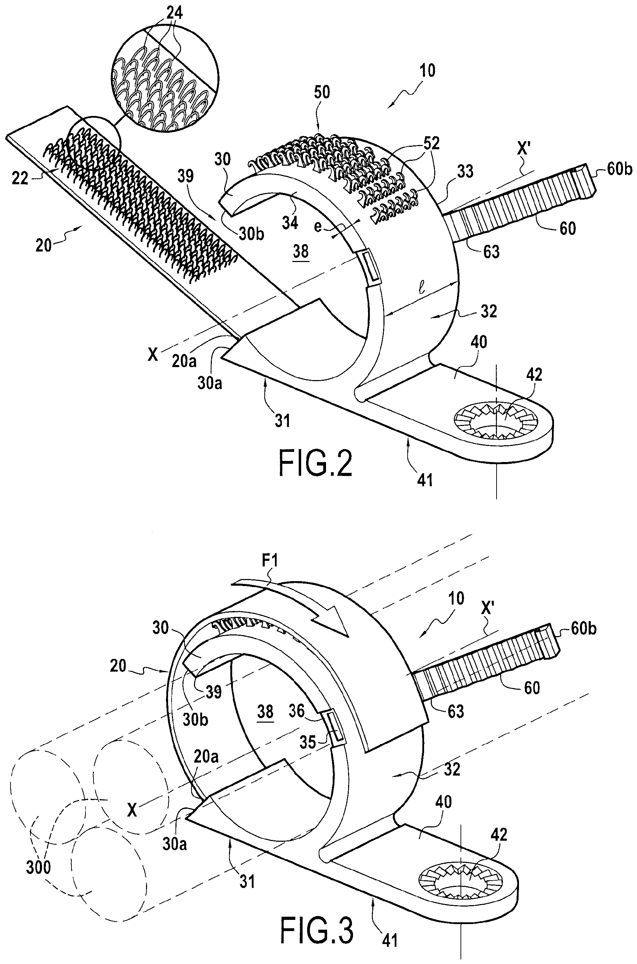

La figure 2 illustre un collier d'attache 10 selon un exemple de réalisation de la présente invention.

Le collier d'attache 10 comprend une partie de ceinture 30, ici en forme de « C », définissant un espace intérieur ouvert 38 destiné à recevoir des éléments allongés 300 devant être attachés (voir la figure 3), et comportant, sur sa face externe 32, un champ 50 d'éléments agrippants 52.

Le collier 10 comprend en outre un ruban 20 solidarisé à une première extrémité libre 30a de la partie de ceinture 30, sa face interne 22 présentant des éléments de retenue 24 aptes à coopérer avec les éléments agrippants 52 de la partie de ceinture 30.

En rabattant le ruban 20 en direction de la seconde extrémité libre 30b de la partie de ceinture 30, de façon à faire coopérer ses éléments de retenue 24 avec les éléments agrippants 52, la partie de ceinture 30 est fermée et les éléments allongés 300 sont retenus dans l'espace intérieur 38.

La partie de ceinture 30 est réalisée par injection d'un matériau thermoplastique, notamment du polyéthylène, du polypropylène, du polyamide, du PEEK, du PMMA, du PC ou du polyester.

La matière qui la constitue, ainsi que son épaisseur e, sont choisies de manière à lui conférer une certaine rigidité.

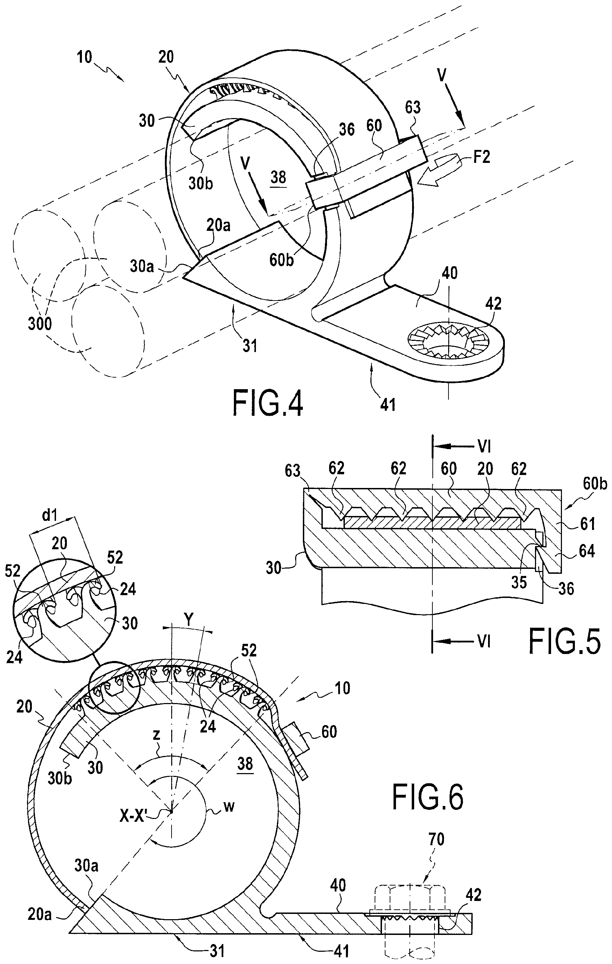

Comme illustré sur la figure 6, la partie de ceinture 30 s'étend sur un secteur angulaire rentrant d'angle w, compris généralement entre 220° et 300°. Ainsi, ses deux extrémités libres 30a, 30b restent espacées angulairement l'une de l'autre, même lorsqu'elle est fermée de la manière précitée, à l'aide du ruban 20.

Dans l'exemple, la partie de ceinture 30 présente un profil intérieur en arc de cercle, d'axe X-X'. Dans toute la description qui va suivre, et sauf précision contraire, une direction radiale est une direction perpendiculaire à l'axe X-X' et coupant cet axe X-X', et une direction axiale est une direction parallèle à l'axe X-X'. De manière plus générale, on définit une direction radiale comme étant perpendiculaire à une tangente à la partie de ceinture.

Comme illustré sur la figure 2, le champ d'éléments agrippants 50 prévu sur la partie de ceinture 30 est un champ de crochets 52. Les crochets 52 ne constituent cependant pas un exemple limitatif de la présente invention, et toutes les caractéristiques décrites dans la suite peuvent s'appliquer de la même manière à tout autre type d'élément agrippant.

Les crochets 52 sont réalisés par moulage par injection, en même temps que la partie de ceinture 30.

Pour réaliser un tel ensemble d'une seule pièce et d'un même moulage, compte tenu de la différence de volume de matière entre la partie de ceinture 30 et les crochets 52, il est préférable d'utiliser l'installation et le procédé décrits dans la demande de brevet français n°0803707 déposée le 1er juillet 2008 au nom de la demanderesse.

Dans l'exemple, le champ de crochets 50 est constitué de plusieurs rangées s'étendant axialement. Chaque rangée de crochets comprend une succession de crochets 52 à tête simple de sens gauche et de sens droit.

Comme illustré sur la figure 2, le champ de crochets 50 est situé du côté de la partie de ceinture 30 qui est opposé à son extrémité 30a à laquelle est solidarisé le ruban 20. A cet endroit, le profil extérieur de la partie de ceinture 30 est courbe, centré sur l'axe X-X'.

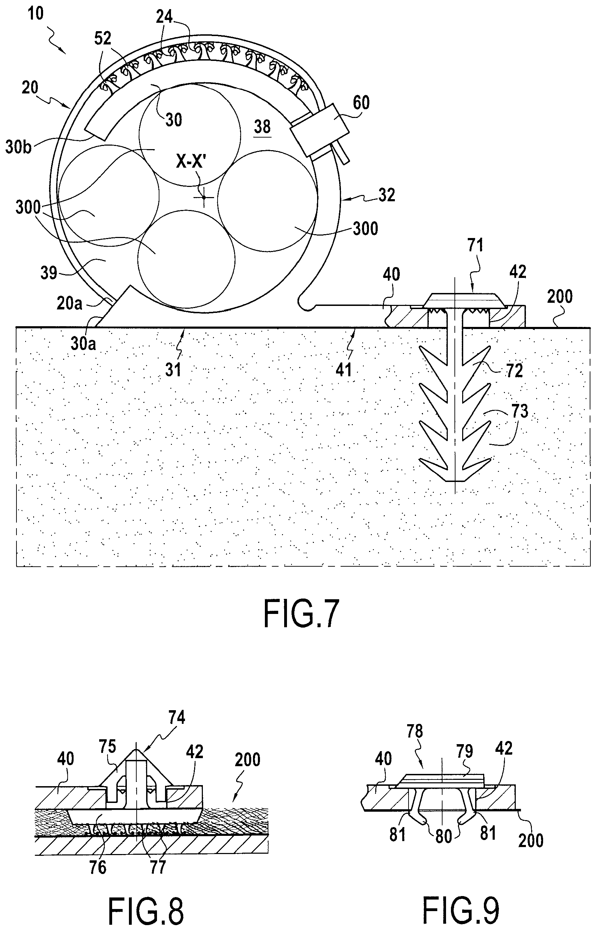

Sur une zone partant de la première extrémité libre 30a de la partie de ceinture 30 la plus éloignée du champ de crochets 50, la face externe 31 de la partie de ceinture 30 est, au contraire, sensiblement plane, de façon à pouvoir prendre appui sur un support plan 200 tel que représenté sur les figures 6 et 7.

Comme illustré sur la figure 2, une patte de fixation 40 s'étend depuis cette zone de la partie de ceinture 30, tangentiellement à cette dernière, en éloignement de l'extrémité 30a. Une face 41 de la patte de fixation 40 vient ainsi prolonger et est située dans le même plan que la face externe plane 31 de la partie de ceinture 30.

La patte de fixation 40 comporte un trou 42 destiné à recevoir une vis 70 ou tout autre élément adapté à coopérer avec le support 200.

Comme illustré sur la figure 2, une barrette de sécurité 60 fait saillie depuis une zone de la partie de ceinture 30 située après le champ de crochets 50, en éloignement de la deuxième extrémité libre 30b de la partie de ceinture 30, c'est-à-dire entre le champ de crochets 50 et la patte de fixation 40. La zone de la partie de ceinture 30 portant la barrette de sécurité 60 présente ici un profil extérieur courbe.

La barrette de sécurité s'étend depuis un premier bord axial 33 de la partie de ceinture 30. Grâce à une articulation 63 ou simplement par pliage, la barrette de sécurité 60 est apte à passer d'une position relevée dans laquelle elle s'étend selon une direction sensiblement perpendiculaire à la face externe 32 de la partie de ceinture 30 (comme illustrée sur les figures 2 et 3), à une position rabattue, dans laquelle son extrémité libre 60b est rabattue en direction du bord axial opposé 34 de la partie de ceinture 30 (comme illustré sur la figure 4).

La barrette de sécurité 60 peut par exemple être moulée en une seule pièce avec la partie de ceinture 30. Dans ce cas, comme illustré sur la figure 5, l'articulation 63 peut être formée par un simple rétrécissement ou étranglement de la matière.

Selon une variante de réalisation, la barrette de sécurité 60 peut être suffisamment souple pour être pliée en position rabattue. Dans ce cas, il n'est pas nécessaire de prévoir une articulation.

Dans l'exemple, la barrette de sécurité 60 présente une longueur sensiblement égale à la largeur I de la partie de ceinture 30, de sorte qu'en position rabattue, elle recouvre la partie de ceinture 30 d'un bord axial 33, à l'autre 34.

Toujours dans l'exemple, l'extrémité libre 60b de la barrette de sécurité 60 coopère par clipsage avec le bord axial opposé 34 de la partie de ceinture 30. Pour cela, la barrette de sécurité 60 comporte, à son extrémité libre 60b, une languette 61 destinée à se positionner en regard du bord axial opposé 34 de la partie de ceinture 30, une fois la barrette de sécurité 60 en position rabattue. Cette languette 61 est terminée par une dent 64 dirigée vers la partie de ceinture 30 et présentant une surface inclinée adaptée à coopérer avec une nervure 35 prévue sur le bord axial 34. Lorsque la languette 61 est engagée contre la nervure 35 avec le bord biseauté de la dent 64, elle fléchit légèrement puis, une fois la dent 64 engagée derrière la nervure 35, revient dans sa position initiale. En bloquant la dent 64, la nervure 35 empêche alors la barrette de sécurité 60 de s'éloigner de la face externe 32 de la partie de ceinture 30.

De préférence, comme représenté sur la figure 4, la nervure 35 est prévue dans un renfoncement 36 du bord axial 34 de la partie de ceinture 30, ce qui empêche l'extrémité libre 60b de la barrette de sécurité 60, une fois clipsée, de glisser tangentiellement à la partie de ceinture 30.

Comme illustré sur la figure 5, la barrette de sécurité 60 comporte, sur sa face dirigée vers la partie de ceinture 30, une pluralité de reliefs en saillie 62 dont la fonction sera décrite plus en détail dans la suite.

Comme indiqué précédemment, le ruban 20 est solidarisé à la première extrémité libre 30a de la partie de ceinture 30, situé du côté opposé au champ de crochets 50.

La partie de ceinture 30 et le ruban 20 sont surmoulés. Comme illustré sur les figures, la largeur et l'épaisseur du ruban 20 sont légèrement inférieures à celles de la partie de ceinture 30, de sorte que l'extrémité proximale 20a du ruban 20 est entièrement noyée dans la matière plastique de la partie de ceinture 30.

Dans l'exemple, le ruban 20 est réalisé en tissu. Il est par ailleurs pourvu, sur sa face interne 22, c'est-à-dire celle dirigée vers l'ouverture 39 de la partie de ceinture 30, de boucles 24 formant éléments de retenue, adaptées à coopérer avec les crochets 52 de la partie de ceinture 30.

Comme illustré sur la figure 3, après que les câbles 300 aient été introduits dans l'espace intérieur 38, le ruban 20 est rabattu contre la face externe 32 de la partie de ceinture 30, de manière à clôturer l'ouverture 39 (voir la flèche F1).

Le ruban 20 est tiré en direction de la partie de ceinture 30 de telle façon qu'au moins une partie des boucles 24 se retrouve en regard du champ de crochets 50 et puisse s'y fixer.

La barrette de sécurité 60 est ensuite déplacée de sa position relevée illustrée sur la figure 3 à sa position rabattue représentée sur la figure 4, puis la languette 61 est clipsée sur la nervure 35 de la partie de ceinture 30. Dans cette position, les reliefs en saillie 62 appuient ponctuellement le ruban 20 contre la face externe 32 de la partie de ceinture 30, et contribuent ainsi à le maintenir en place (voir la figure 5).

Le collier 10 est alors prêt à être fixé sur un support 200 à l'aide d'une vis 70 telle qu'illustrée sur la figure 6, d'une agrafe telle qu'illustrée sur les figures 7 ou 8, d'un clip tel qu'illustré sur la figure 9 ou de tout autre moyen de fixation adapté.

L'agrafe 71 représentée sur la figure 7 est particulièrement adaptée à la fixation d'un collier 10 selon l'invention à un panneau en mousse constitué d'un agglomérat de billes en matière thermoplastique. Ses branches 72 en forme de sapin définissent entre elles des interstices 73 dans lesquels peuvent venir se loger une ou plusieurs billes du panneau.

L'agrafe 74 illustrée sur la figure 8, comprend une partie 75 destinée à être clipsée dans le trou 42 de la patte de fixation 40, et une base 76 plus large munie, sur sa face inférieure, de crochets 77. Cette agrafe 74 est particulièrement adaptée à la fixation sur un support 200 en non tissé.

La figure 9 représente un clip 78 adapté à être inséré dans le trou 42 de la patte de fixation puis dans un trou d'un support 200. Le clip 78 comprend une tête 79 adaptée à venir en appui sur la face supérieure de la patte de fixation 40 et deux bras 80 faisant saillie depuis la face inférieure de la tête 79, pliés en V, et comprenant chacun un ergot 81 faisant saillie radialement vers l'extérieur. Les bras 80 sont adaptés à fléchir vers l'intérieur lorsque les ergots 81 coopèrent avec la paroi interne du trou du support 200 et à se redéployer vers l'extérieur une fois les ergots 81 hors dudit trou, les ergots 81 constituant alors des moyens de blocage en translation du clip 78 par rapport au support 200.

Des dimensions préférentielles du collier selon l'invention sont définies ci-après.

De manière avantageuse, la partie de ceinture 30 présente une épaisseur e comprise entre 1.5 et 3 mm. Le champ de crochets 50 s'étend sur un secteur angulaire z au moins égal à 45°, et sur une largeur comprise entre 6 et 10 mm, et en tout cas supérieure à la moitié de la largeur de la partie de ceinture 30. Le champ de crochets 50 s'étend au total sur une surface comprise entre 120 et 180 mm². Il comprend une pluralité de rangées de crochets parallèles, s'étendant axialement. Généralement, on choisira un nombre de rangées de crochets compris entre 7 et 15. La distance d1 mesurée linéairement entre deux points similaires de deux crochets 52 immédiatement voisins l'un de l'autre en se trouvant sur deux rangées adjacentes (voir la figure 6) est comprise entre 2 et 3 mm. Le pas angulaire y entre deux rangées de crochets adjacentes est par exemple compris entre 3 et 8°.

Selon un exemple de réalisation particulièrement avantageux de l'invention, la partie de ceinture 30 présente une forme générale d'arc de cercle de rayon extérieur r= 12.05mm. Son épaisseur e, c'est-à-dire la distance prise dans la direction radiale, séparant la face interne et la face externe de la partie de ceinture, est égale à 2mm. Le champ de crochets 50 s'étend au total sur un secteur angulaire de 90° soit une longueur d'arc égale à 18,93mm, et sur une largeur (prise en direction axiale) égale à 7.98 mm. La surface totale du champ de crochets est alors égale à 151mm². La distance d1 mesurée linéairement entre deux points similaires de deux crochets 52 immédiatement voisins l'un de l'autre en se trouvant sur deux rangées adjacentes est égale à 2.31mm. Le pas angulaire y entre deux rangées de crochets 52 adjacentes est égal à 5°. Avec ces dispositions, le volume total de la pièce comprenant la partie de ceinture 30, la barrette de sécurité 60, le champ de crochets 50 et la patte de fixation 40, est égal à 2800 millimètres cube (mm³).

## Revendications

1. Collier d'attache (10) pour des éléments allongés (300) comprenant une partie de ceinture (30) apte à être fixée sur un support (200), cette partie de ceinture (30) étant ouverte et définissant un espace intérieur (38) apte à recevoir les éléments allongés (300), le collier (10) comprenant en outre des moyens pour fermer la partie de ceinture (30) de manière à retenir les éléments allongés (300) dans l'espace intérieur (38), **caractérisé en ce que** les moyens pour fermer la partie de ceinture (30) comprennent d'une part un champ (50) d'éléments agrippants (52) formés en plastique injecté, d'une seule pièce avec la partie de ceinture (30) et situés sur la face externe (32) de cette dernière et, d'autre part, un ruban (20) solidarisé à la partie de ceinture (30) par l'une de ses extrémités (20a), sa face interne (22) présentant des moyens de retenue (24) aptes à coopérer avec les éléments agrippants (52) de la partie de ceinture (30) pour solidariser le ruban et la partie de ceinture au moyen d'un système auto-agrippant, la partie de ceinture (30) et le ruban (20) étant réalisés en matériau thermoplastique, la partie de ceinture (30) présentant une rigidité supérieure à celle du ruban.

2. Collier d'attache (10) selon la revendication 1, dans lequel la partie de ceinture (30) est surmoulée sur le ruban (20).

3. Collier d'attache (10) selon la revendication 1 ou 2, dans lequel le ruban (20) est solidarisé à une extrémité libre (30a) de la partie de ceinture (30) et le champ d'éléments agrippants (50) recouvre une partie de la face externe (32) de la partie de ceinture (30) située du côté de son autre extrémité libre (30b).

4. Collier d'attache (10) selon l'une quelconque des revendications 1 à 3, dans lequel le ruban (20) est formé à partir de fibres.

5. Collier d'attache (10) selon la revendication 4, dans lequel le ruban (20) est réalisé en tissu et comprend un champ de boucles (24) formant moyens de retenue.

6. Collier d'attache (10) selon l'une quelconque des revendications 1 à 5, dans lequel les éléments agrippants (52) sont des crochets.

7. Collier d'attache (10) selon l'une quelconque des revendications 1 à 6, dans lequel le champ d'éléments agrippants (50) s'étend sur un secteur angulaire de la partie de ceinture (30) au moins égal à 45°.

8. Collier d'attache (10) selon l'une quelconque des revendications 1 à 7, dans lequel une barrette de sécurité (60) s'étend depuis un premier bord (33) de la partie de ceinture (30), et ladite barrette (60) est configurée de sorte que son extrémité libre (60b) est apte à être rabattue en direction du bord opposé (34) de la partie de ceinture (30).

9. Collier d'attache (10) selon la revendication 8, dans lequel l'extrémité libre (60b) de la barrette de sécurité (60) est apte à être clipsée sur le bord opposé (34) de la partie de ceinture (30).

10. Collier d'attache (10) selon la revendication 8 ou 9, dans lequel, en position rabattue, la barrette de sécurité (60) recouvre la partie de ceinture (30) sur toute sa largeur (I).

11. Collier d'attache (10) selon l'une quelconque des revendications 8 à 10, dans lequel la barrette de sécurité (60) comporte, sur sa face dirigée vers la partie de ceinture (30), une pluralité de reliefs en saillie (62).

12. Collier d'attache (10) selon l'une quelconque des revendications 1 à 11, dans lequel une patte de fixation (40), apte à coopérer avec un élément de fixation (70), notamment une vis, s'étend depuis la partie de ceinture (30), sensiblement tangentiellement à cette dernière.

## Patentansprüche

1. Befestigungsschelle (10) für längliche Elemente (300), die einen Ringteil (30) umfasst, der dazu geeignet ist, an einem Halter (200) befestigt zu werden, wobei dieser Ringteil (30) offen ist und einen Innenraum (38) definiert, der dazu geeignet ist, längliche Elemente (300) aufzunehmen, wobei die Schelle (10) ferner Mittel zum Schließen des Ringteils (30) umfasst, derart dass die länglichen Elemente (300) in dem Innenraum (38) festgehalten werden, **dadurch gekennzeichnet, dass** die Mittel zum Schließen des Ringteils (30) einerseits einen Bereich (50) aus Greifelementen (52), die aus Spritzkunststoff gebildet sind, einteilig mit dem Ringteil (30) sind und sich auf der Außenfläche (32) dieses letzteren befinden, und andererseits ein Band (20) umfassen, das fest über eines seiner Enden (20a) mit dem Ringteil (30) verbunden ist, wobei seine Innenfläche (22) Rückhaltemittel (24) aufweist, die dazu geeignet sind, mit den Greifelementen (52) des Ringteils (30) zusammenzuwirken, um das Band und den Ringteil mittels eines selbstgreifenden Systems fest zu verbinden, wobei der Ringteil (30) und das Band (20) aus thermoplastischem Material hergestellt sind, wobei der Ringteil (30) eine Steifigkeit aufweist, die höher ist als diejenige des Bandes.

2. Befestigungsschelle (10) nach Anspruch 1, wobei der Ringteil (30) an dem Band (20) aufgeformt ist.

3. Befestigungsschelle (10) nach Anspruch 1 oder 2, wobei das Band (20) fest mit einem freien Ende (30a) des Ringteils (30) verbunden ist und der Bereich aus Greifelementen (50) einen Teil der Außenfläche (32) des Ringteils (30) bedeckt, der sich auf der Seite seines anderen freien Endes (30b) befindet.

4. Befestigungsschelle (10) nach einem der Ansprüche 1 bis 3, wobei das Band (20) aus Fasern gebildet ist.

5. Befestigungsschelle (10) nach Anspruch 4, wobei das Band (20) aus Gewebe hergestellt ist und einen Bereich aus Schleifen (24) umfasst, die Rückhaltemittel bilden.

6. Befestigungsschelle (10) nach einem der Ansprüche 1 bis 5, wobei die Greifelemente (52) Haken sind.

7. Befestigungsschelle (10) nach einem der Ansprüche 1 bis 6, wobei der Bereich aus Greifelementen (50) sich über einen Winkelsektor des Ringteils (30) erstreckt, der mindestens gleich 45° ist.

8. Befestigungsschelle (10) nach einem der Ansprüche 1 bis 7, wobei ein Sicherheitsstab (60) sich von einem ersten Rand (33) des Ringteils (30) erstreckt und der Stab (60) derart ausgestaltet ist, dass sein freies Ende (60b) dazu geeignet ist, in Richtung des entgegengesetzten Randes (34) des Ringteils (30) umgeklappt zu werden.

9. Befestigungsschelle (10) nach Anspruch 8, wobei das freie Ende (60b) des Sicherheitsstabs (60) dazu geeignet ist, an den entgegengesetzten Rand (34) des Ringteils (30) geclipst zu werden.

10. Befestigungsschelle (10) nach Anspruch 8 oder 9, wobei der Sicherheitsstab (60) in der umgeklappten Stellung den Ringteil (30) über seine gesamte Breite (I) bedeckt.

11. Befestigungsschelle (10) nach einem der Ansprüche 8 bis 10, wobei der Sicherheitsstab (60) auf seiner hin zu dem Ringteil (30) gerichteten Seite mehrere hervorstehende Reliefs (62) umfasst.

12. Befestigungsschelle (10) nach einem der Ansprüche 1 bis 11, wobei eine Befestigungslasche (40), die dazu geeignet ist, mit einem Befestigungselement (70), insbesondere einer Schraube, zusammenzuwirken, sich von dem Ringteil (30) im Wesentlichen tangential zu diesem letzteren erstreckt.

## Claims

1. An attachment collar (10) for elongate elements (300), the collar comprising a belt portion (30) suitable for being fastened to a support (200), the belt portion (30) being open and defining an inside space (38) suitable for receiving the elongate element (300), the collar (10) further comprising means for closing the belt portion (30) so as to retain the elongate elements (300) in the inside space (38), the collar being **characterized in that** the means for closing the belt portion (30) comprise firstly an array (50) of gripping elements (52) made of plastics material injected integrally with the belt portion (30) and situated on its outside face (32), and secondly a tape (20) secured to the belt portion (30) via one of its ends (20a), the inside face (22) of the tape presenting retention means (24) suitable for co-operating with the gripping elements (52) of the belt portion (30) in order to secure the tape and the belt portion together with a self-gripping system, wherein the belt portion (30) and the tape (20) are made of thermoplastic material, the belt portion (30) presenting stiffness that is greater than the stiffness of the tape.

2. An attachment collar (10) according to claim 1, wherein the belt portion (30) is overmolded onto the tape (20) .

3. An attachment collar (10) according to claim 1 or claim 2, wherein the tape (20) is secured to a free end (30a) of the belt portion (30) and the gripping element array (50) covers a portion of the outside face (32) of the belt portion (30) situated beside its other free end (30b) .

4. An attachment collar (10) according to any one of claims 1 to 3, wherein the tape (20) is made out of fibers.

5. An attachment collar (10) according to claim 4, wherein the tape (20) is made of woven fabric and includes an array of loops (24) forming retention means.

6. An attachment collar (10) according to any one of claims 1 to 5, wherein the gripping elements (52) are hooks.

7. An attachment collar (10) according to any one of claims 1 to 6, wherein the gripping element array (50) extends over an angular sector of the belt portion (30) of at least 45°.

8. An attachment collar (10) according to any one of claims 1 to 7, wherein a safety clip (60) extends from a first edge (33) of the belt portion (30), and said clip (60) is configured so that its free end (60b) is suitable for being displaced towards the opposite edge (34) of the belt portion (30).

9. An attachment collar (10) according to claim 8, 9 the free end (60b) of the safety clip (60) is suitable for being clipped onto the opposite edge (34) of the belt portion (30).

10. An attachment collar (10) according to claim 8 or claim 9, wherein the safety clip (60), when in the pressed-down position, covers the belt portion (30) across its entire width (f).

11. An attachment collar (10) according to any one of claims 8 to 10, wherein the safety clip (60) includes a plurality of projecting portions in relief (62) on its face directed towards the belt portion (30).

12. An attachment collar (10) according to any one of claims 1 to 11, wherein a fastener tab (40) suitable for co-operating with a fastener element (70), in particular a screw, extends from the belt portion (30), substantially tangentially relative thereto.
